# EUROPÄISCHE PATENTSCHRIFT

(11) **EP 2 054 483 B1**
(45) Veröffentlichungstag und Bekanntmachung des Hinweises auf die Patenterteilung: **28.04.2010**
(21) Anmeldenummer: 07787177.0
(22) Anmeldetag: 06.07.2007
(51) Int. Cl.: C09K 3/18

(54) **ENTEISUNGSMITTEL UND/ODER VEREISUNGSSCHUTZMITTEL**
DE-ICER AND/OR ANTI-ICING AGENT
AGENT DE DÉGIVRAGE ET/OU ANTIGIVRE

(30) Priorität: 26.08.2006 DE 102006040122
(43) Veröffentlichungstag der Anmeldung: 06.05.2009
(73) Patentinhaber: Evonik Degussa GmbH, 45128 Essen (DE)
(72) Erfinder: SEILER, Matthias, 64347 Griesheim (DE); BERNHARDT, Stefan, 63075 Offenbach (DE)
(86) Internationale Anmeldenummer: PCT/EP2007/056895
(87) Internationale Veröffentlichungsnummer: WO 2008/025589

(56) Entgegenhaltungen:
- DE-A1- 4 412 790
- JP-A- 10 237 428
- US-A- 5 750 047

## Beschreibung

Die vorliegende Erfindung betrifft mit dendritischen Polymeren verdickte Wasser/Glykolgemische, die als Enteisungsmittel und/oder Vereisungsschutzmittel, insbesondere als Vereisungsschutzmittel, eingesetzt werden können. Diese Gemische dienen zur Entfernung gefrorener Niederschläge, wie Eis und Schnee, von Oberflächen sowie zur Vermeidung einer Wiedervereisung dieser Oberflächen.

Besondere Bedeutung haben Enteisungsmittel und Vereisungsschutzmittel für die Behandlung von Flugzeugoberflächen. Während des Flugzeugstarts sollen diese Fluide durch die dabei auftretenden Scherkräfte von den Flugzeugoberflächen abfließen. Der Einfachheit halber wird die Gesamtheit dieser Fluide im folgenden als Flugzeugenteisungsmittel oder Enteisungsmittel bezeichnet.

Während der Wintermonate können Flugzeugoberflächen durch gefrorene Niederschläge belegt werden. Diese gefrorenen Niederschläge müssen vor dem Start des Flugzeugs entfernt werden, da sie zu einer starken Beeinträchtigung des für den Start nötigen Auftriebs führen.

Man unterscheidet zwischen Enteisungsmitteln, die vorwiegend zur Entfernung gefrorener Niederschläge eingesetzt werden, und Vereisungsschutzmitteln, die auf bereits enteisten und somit gereinigten Flugzeugoberflächen einer Wiedervereisung entgegenwirken sollen.

Flugzeugenteisungsmittel müssen einer großen Zahl von Anforderungen genügen. Gemäss der SAE-Spezifikationen AMS (Aerospace Material Standards) 1424 und AMS 1428 werden nicht nur das Abfließverhalten und die Vereisungsschutzzeit untersucht, sondern auch viele weitere physikalische Eigenschaften.

Dazu zählt beispielsweise die Lagerstabilität der Flugzeugenteisungsmittel. Die Viskosität der Flugzeugenteisungsmittel soll sich während der Lagerung über einen längeren Zeitraum möglichst nicht ändern. Ein gutes Flugzeugenteisungsmittel sollte möglichst nicht korrosiv sein, vor allem nicht gegenüber Aluminium, Magnesium, Stahl und Acrylglas. Es soll möglichst umweltverträglich sein und soll möglichst keine Brände unterstützen.

Zusätzlich sollen verdickte Flugzeugenteisungsmittel möglichst scherstabil sein. Die Fluide werden mit Sprühfahrzeugen aufgetragen, die eine hohe mechanische Belastung des Fluids verursachen. Die Enteisungsmittel sollen dabei möglichst wenig ihrer ursprünglichen Viskosität verlieren.

Weiterhin sollen Reste von Flugzeugenteisungsmitteln, die sich nach dem Start des Flugzeugs in aerodynamisch ruhigen Zonen der Tragflächen angesammelt haben und somit nicht abfließen konnten, möglichst keine Gelablagerungen bilden.

Im allgemeinen werden zur Entfernung gefrorener Niederschläge Enteisungsmittel auf Wasser/Glykolbasis verwendet. Das Glykol dient als gefrierpunktsabsenkendes Medium. Zusätzlich sind Tenside enthalten, welche die Oberflächenspannung des Enteisungsmittels herabsetzen und somit die Benetzung der Flugzeugoberflächen verbessern. Außerdem können Enteisungsmittel Korrosionsinhibitoren, Entschäumer, Farbstoffe und flammhemmende Substanzen enthalten. Solche nicht-verdickten Enteisungsmittel zeichnen sich durch Newtonsches Fliessverhalten aus. Das bedeutet, dass ihre Viskosität scherunabhängig ist. Entsprechend der SAE (Society of Automotive Engineering)-Konvention werden nicht-verdickte Enteisungsmittel mit Newtonschem Fliessverhalten als Typ I-Fluide bezeichnet. Typ I-Fluide werden je nach Außentemperatur mit einer unterschiedlichen Menge Wasser verdünnt und mit Sprühfahrzeugen heiß auf die Flugzeugoberflächen aufgetragen. Mit ihrer Hilfe lassen sich gefrorene Ablagerungen effektiv entfernen. Allerdings weisen Typ I-Fluide nur einen sehr begrenzten Schutz vor Wiedervereisung auf.

Ein derartiges Enteisungsmittel wird z. B. in der WO 94/05741 beschrieben. Sie betrifft ein Enteisungsmittel, das 25 % bis 95 % Glykol, einen pH-Regler, der den pH des Mittels auf 7 bis 10 einstellt, und mindestens ein nichtionisches oder anionisches Tensid enthält.

Im Gegensatz zu reinen Enteisungsmitteln enthalten Vereisungsschutzmittel zusätzlich noch Verdickersubstanzen. Die dadurch verursachte Viskosität dieser Fluide verbessert den Schutz vor Wiedervereisung, denn das Fluid fließt im Ruhezustand nur sehr langsam von den Flugzeugoberflächen ab und kann somit über einen längeren Zeitraum gefrierende Niederschläge absorbieren. Vereisungsschutzmittel erhalten durch die dabei eingesetzten Verdickungsmittel ein Nicht-Newtonsches, pseudoplastisches Fliessverhalten. Die Viskosität dieser Fluide ist scherabhängig. Im Moment des Flugzeugstarts sinkt die Viskosität des Fluids durch den zunehmenden Luftwiderstand sehr stark ab und es kann somit rasch von den Flugzeugoberflächen abfließen. Je nach Vereisungsschutzzeit unterscheidet man zwischen Typ II- und Typ IV-Fluiden. Typ III-Fluide zeichnen sich durch ein besonders pseudo-plastisches Fliessverhalten aus, so dass sie zur Enteisung von Flugzeugen mit geringer Startgeschwindigkeit dienen.

Als Verdicker werden meist organische Polymere, wie z. B. vernetzte Homo- oder Copolymerisate von ungesättigten Carbonsäuren, wie Acrylsäure, Methacrylsäure und deren Derivate, wie Ester und Amide, ferner Celluloseether (Alkyl-, Hydroxyalkyl- und Carboxyalkylcellulose-ether), Polyethylenglykole, Polyvinylpyrrolidone, Polyvinylalkohole, Polyethylenoxide, Xanthangummi und dergleichen, oder Mischungen von solchen wasserlöslichen Polymeren, eingesetzt. Der Verdickungsmechanismus all dieser organischen Polymere beruht auf der Ausbildung eines Polymernetzwerkes in der Glykollösung.

Als Beispiele seien die folgenden Druckschriften genannt:

US 5,118,434 lehrt die Verwendung von Acrylsäure-Copolymeren, um das Ausfallen von Salzen aus Glykol-Wasser-Mischungen zu vermeiden. Dabei sollen die Copolymere weiterhin 2-Acrylamido-2-methyl-propylsulfonsäure-Einheiten, 4-Styrolsulfonsäure-Einheiten und/oder Niederalkylhydroxyacrylat-Einheiten und/oder Salze dieser Einheiten enthalten.

WO 93/24543 beschreibt Vereisungsschutzmittel auf Basis einer wässrigen Glykollösung, das ein Kammpolymer mit hydrophilem Polymerrückgrat und hydrophoben Seitenketten als Verdickungsmittel umfasst.

EP 0 769 541 A1 offenbart ein Enteisungsmittel und Vereisungsschutzmittel für Flugzeuge, das als Verdicker wasserlösliche vernetzte Acrylhomopolymere, 0,02 Gew.-% bis 1,5 Gew.-% mindestens eines nichtionischen Tensids und 0,03 Gew.-% bis 1 Gew.-% mindestens einer wasserlöslichen Salzverbindung enthält. Dabei besitzt das Acrylpolymer ein mittleres Molekulargewicht von 750.000 g/mol bis 1.250.000 g/mol und weist in Form einer 0,5 Gew.-%igen wässrigen Lösung mit einem pH-Wert von 7,0 und einer Temperatur von 20°C eine Viskosität von 1.000 mPa.s bis 13.000 mPa.s auf, gemessen als Brookfield-Viskosität bei 20 Upm.

US 5,708,068 lehrt ein Enteisungs- oder Vereisungsschutzmittel, das eine verdickte wässrige Glykol-und/oder Glyzerinlösung enthält, wobei die Verdickung dadurch erreicht wird, dass man ein Latex-Verdickungsmittel mit einer Base in Gegenwart eines komplexbildenden Tensids neutralisiert.

WO 98/46695 betrifft ein Enteisungs- oder Vereisungsschutzmittel, das 35,0 Gew.-% bis 80,0 Gew.-% Glykol, Wasser, ein erstes nichtionisches Tensid mit einem HLB im Bereich von 4 bis 17, ein zweites nichtionisches Tensid mit einem HLB im Bereich von 5 bis 18, ein Polycarboxylat als Emulgator und einen pH-Regler enthält.

Die genannten Verdickungsmittel werden jedoch bei mechanischer Belastung mehr oder weniger stark irreversibel geschädigt. Das zeigt sich durch einen irreversiblen Viskositätsverlust bei starker Scherbeanspruchung durch schnelllaufende Rührgeräte, Pumpen oder beim Fliessen durch kleine Leitungsquerschnitte. Die mechanische Belastung bedingt einen Bruch der Polymerketten und damit verbunden eine irreversible Schädigung des Polymernetzwerkes.

Es besteht daher der Wunsch nach Flugzeugvereisungsschutzmitteln, die bei mechanischer Belastung, wie Pumpen oder Versprühen mit Sprühgeräten, möglichst wenig Viskosität verlieren.

Zusätzlich neigen die genannten Verdickungsmittel unter bestimmten äußeren Bedingungen zu einer Gelbildung. Sammeln sich Flugzeugvereisungsschutzmittel nach dem Start in aerodynamisch ruhigen Bereichen des Flugzeuges an, so trocknen diese Rückstände durch den geringen Luftdruck in Flughöhen ab 5.000 m vollständig ein. Diese Rückstände können stark aufquellen, falls sie mit Feuchtigkeit wie Regenwasser in Kontakt kommen. Die daraus resultierenden Gele können bei tiefen Temperaturen, wie sie in großen Flughöhen auftreten, einfrieren und dadurch die Höhenruder blockieren, wodurch das Flugzeug nicht mehr vollständig manövrierfähig ist.

Die auf herkömmlichen Verdickungsmitteln basierenden Flugzeugvereisungsschutzmittel bilden deutlich sichtbare Mengen an Gelrückständen. Je nach Verdickertyp lassen sich diese Gele im Laufe der Rehydratisierung mit dem Wasser mehr oder weniger gut ablösen. Wünschenswert wäre jedoch ein Fluidrückstand, der sich innerhalb der ersten Tauchvorgänge durch das Wasser vollständig abspülen ließe.

Es besteht daher auch der Wunsch Flugzeugvereisungsschutzmittel so zu formulieren, dass eingetrocknete Fluidreste mit Regenwasser keine Gelrückstände bilden können.

Zur Lösung dieser Probleme schlägt die europäische Patentanmeldung EP 1 553 152 A2 ein Enteisungs- oder Vereisungsschutzmittel vor, das 35 Gew.-% bis 93 Gew.-% mindestens eines Glykols und 0,01 Gew.-% bis 15 Gew.-% mindestens eines wasserlöslichen Schichtsilikats sowie Wasser enthält.

Nachteil ist, dass mitunter hohe Konzentrationen der wasserlöslichen Schichtsilikate nötig sind, um eine verdickende Wirkung zu erreichen. Darüber hinaus kann, besonders nach einer längeren Lagerung des Vereisungsschutzmittels, eine Agglomeration der Schichtsilikate auftreten, die eine Re-Dispergierung bzw. den Einsatz von Dispergieradditiven notwendig macht.

Aufgabe der vorliegenden Erfindung war es nun, Enteisungsmittel und Vereisungsschutzmittel mit einem noch besseren Eigenschaftsprofil anzugeben. Insbesondere sollte das Eigenschaftsprofil der Enteisungsmittel und Vereisungsschutzmittel in mindestens einem, vorzugsweise möglichst vielen, der folgenden Punkte verbessert werden:
➢ eine möglichst hohe Lagerstabilität,
➢ möglichst nicht korrosiv,
➢ eine möglichst geringe Toxizität,
➢ möglichst nicht brandfördernd,
➢ eine möglichst hohe Scherstabilität,
➢ nach vollständigem Trocknen möglichst keine Ausbildung von Rückständen, die bei Rehydratisierung zur Ausbildung schwerlöslicher Gele führen können,
➢ auf den zu behandelnden Oberflächen Ausbildung eines möglichst klaren Films und
➢ eine möglichst starke Scherverdünnung, d. h. bei niedrigen Scherkräften eine möglichst hohe Viskosität und bei hohen Scherkräften eine möglichst niedrige Viskosität.

Weiterhin sollten die Enteisungsmittel und Vereisungsschutzmittel auf möglichst einfache Art und Weise, großtechnisch und kostengünstig erhältlich sein.

Darüber hinaus sollten besonders zweckmäßige Anwendungsgebiete der Enteisungsmittel und Vereisungsschutzmittel aufgezeigt werden.

Gelöst werden diese Aufgaben sowie weitere, die zwar nicht explizit genannt werden, sich aber aus den hierin diskutierten Zusammenhängen wie selbstverständlich ableiten lassen oder sich aus diesen zwangsläufig ergeben, durch das in Anspruch 1 beschriebene

Enteisungs- und/oder Vereisungsschutzmittel. Zweckmäßige Abwandlungen dieses Mittels werden in den auf Anspruch 1 rückbezogenen Unteransprüchen unter Schutz gestellt.

Dadurch, dass ein Enteisungs- oder Vereisungsschutzmittel bereitgestellt wird, das, jeweils auf sein Gewicht bezogen, 35,0 Gew.-% bis 95,0 Gew.-% mindestens eines Glykols, 0,001 Gew.-% bis 5,0 Gew.-% mindestens eines dendritischen Polymers und 0,01 Gew.-% bis 5,0 Gew.-% mindestens eines weiteren Verdickungsmittels sowie ggf. Wasser enthält, gelingt es auf nicht ohne weiteres vorhersehbare Weise, ein Enteisungsmittel oder Vereisungsschutzmittel mit deutlich verbessertem Eigenschaftsprofil zugänglich zu machen, welches sich insbesondere durch die folgende Merkmale auszeichnet:
➢ das Mittel besitzt eine vergleichsweise hohe Lagerstabilität,
➢ das Mittel ist nicht korrosiv, vor allem nicht gegenüber Aluminium, Magnesium, Stahl und Acrylglas,
➢ das Mittel weist eine vergleichsweise geringe Toxizität auf,
➢ das Mittel ist nicht brandfördernd,
➢ das Mittel zeigt eine vergleichsweise hohe Scherstabilität und verliert üblicherweise nicht mehr als 30 %, bevorzugt nicht mehr als 25 % und ganz besonders bevorzugt nicht mehr als 20 %, seiner ursprünglichen Viskosität,
➢ nach vollständigem Trocknen wird die Bildung von Rückständen, die bei Rehydratisierung zur Ausbildung schwerlöslicher Gele führen könnten, bestmöglich vermieden:
   die eingesetzten dendritischen Polymere neigen im Allgemeinen nicht zur Gelbildung mit Wasser und zeichnen sich weiterhin durch eine im Allgemeinen hervorragende Löslichkeit in wässrigen (polaren) Systemen aus; dennoch gebildete geringfügige Anteile Gel lassen sich durch Wasser daher leicht abspülen,
➢ das Mittel bildet auf den zu behandelnden Oberflächen einen vergleichsweise klaren Film:
   die eingesetzten dendritischen Polymere adsorbieren auf sich ggf. bildenden Kristallwachstumsflächen und verlangsamen oder verhindern so die Kristallisation von Bestandteilen des Mittels, wie z. B. Korrosionsinhibitoren, Flammhemmer,
➢ das Mittel zeigt eine vergleichsweise starke Scherverdünnung, d. h. es besitzt bei niedrigen Scherkräften eine vergleichsweise hohe Viskosität und bei hohen Scherkräften eine vergleichsweise niedrige Viskosität,
➢ die Effektivität von üblichen Verdickern wird erhöht:
   die eingesetzten dendritischen Polymere können aufgrund der Vielzahl an funktionellen Gruppen mit dem Verdicker, z. B. über Wasserstoffbrücken oder andere polare Wechselwirkungen, ein physikalisches Netzwerk ausbilden, welches sich bei Scherbeanspruchung (z. B. beim Start eines Flugzeugs) auflöst und das Abfließen des Mittels ermöglicht.

Gegenstand der vorliegenden Erfindung ist somit ein Enteisungs- oder Vereisungsschutzmittel, das, jeweils bezogen auf sein Gesamtgewicht, 35,0 Gew.-% bis 95,0 Gew.-% mindestens eines Glykols, 0,001 Gew.-% bis 5,0 Gew.-% mindestens eines dendritischen Polymers und 0,01 Gew.-% bis 5,0 Gew.-% mindestens eines weiteren Verdickungsmittels sowie vorzugsweise Wasser enthält.

Ein weiterer Gegenstand der Erfindung ist die Verwendung von 0,001 Gew.-% bis 5,0 Gew.-% mindestens eines dendritischen Polymers und 0,01 Gew.-% bis 5,0 Gew.-% mindestens eines weiteren Verdickungsmittels zur Verdickung eines Enteisungs- oder Vereisungsschutzmittels, welches 35,0 Gew.-% bis 95,0 Gew.-% mindestens eines Glykols sowie vorzugsweise Wasser enthält.

Ein erfindungsgemäßes Enteisungsmittel und/oder Vereisungsschutzmittel kann in einer bevorzugten Ausführungsform folgende Bestandteile umfassen:
a) 35,0 Gew.-% bis 95,0 Gew.-%, vorzugsweise 45,0 Gew.-% bis 94,0 Gew.-% und ganz besonders bevorzugt 55,0 Gew.-% bis 93,0 Gew.-% mindestens eines Alkylenglykols mit 2 bis 3 C-Atomen oder mindestens eines Oxalkylenglykols mit 4 bis 6 C-Atomen,
b) 0 bis 10,0 Gew.-%, vorzugsweise 0,02 Gew.-% bis 2,0 Gew.-%, mindestens eines nichtionischen oder anionischen Tensids,
c) 0,01 Gew.-% bis 5,0 Gew.-%, vorzugsweise 0,05 Gew.-% bis 2,0 Gew.-% mindestens eines Korrosionsinhibitors,
d) 0,001 Gew.-% bis 5,0 Gew.-%, vorzugsweise 0,005 Gew.-% bis 2,0 Gew.-% und ganz besonders bevorzugt 0,01 Gew.-% bis 0,75 Gew.-% mindestens eines dendritischen Polymers,
e) 0,01 Gew.-% bis 5,0 Gew.-%, bevorzugt 0,05 Gew.-% bis 2,0 Gew.-%, ganz besonders bevorzugt 0,1 Gew.-% bis 1,0 Gew.-%, mindestens eines weiteren Verdickungsmittels, günstigerweise aus der Gruppe der Homo- oder Copolymerisate von ungesättigten Carbonsäuren, wie Acrylsäure, Methacrylsäure und deren Derivate, wie Ester und Amide, ferner Celluloseether (Alkyl-, Hydroxyalkyl- und Carboxyalkylcellulose-Ether), Polyethylenglykole, Polyvinylpyrrolidone, Polyvinylalkohole, Polyethylenoxide, Xanthangummi,
f) gegebenenfalls mindestens eine basische Verbindung aus der Gruppe der Alkalimetallcarbonate, Alkalimetallhydroxide oder Amine zur Einstellung des pH-Wertes zwischen 6 und 11,
g) gegebenenfalls mindestens eine saure Verbindung aus der Gruppe der anorganischen oder organischen Säuren zur Einstellung des pH-Wertes zwischen 6 und 11 und
h) ggf. Wasser.

Die Gewichtsprozente beziehen sich stets auf das Gewicht des Enteisungsmittels oder des Vereisungsschutzmittels.

Die Bestandteile b, c, f, g und h sind nicht zwingend in dem erfindungsgemäßen Enteisungsmittel oder Vereisungsschutzmittel enthalten. Bevorzugte Enteisungsmittel oder Vereisungsschutzmittel enthalten jedoch neben den Bestandteilen a, d und e einen oder mehrere weitere Bestandteile b, c, f, g und h.

Die Komponente a) des erfindungsgemäßen Enteisungsmittels oder des Vereisungsschutzmittels ist vorzugsweise Ethylenglykol, Propylenglykol (1,2-Propylenglykol oder 1,3-Propylenglykol), Diethylenglykol, Dipropylenglykol oder eine Mischung von zwei oder mehreren dieser Glykole, wobei Propylenglykole besonders bevorzugt werden. Die Glykole dienen vor allem zur Absenkung des Gefrierpunkts und stellen neben Wasser die Hauptkomponente des Enteisungsmittels dar.

Die Komponente b) kann vorzugsweise ein Fettalkohol mit 6 bis 24 C-Atomen, vorzugsweise 8 bis 18 C-Atomen im Alkylrest oder ein Alkoxylat davon mit 1 bis 10, vorzugsweise 1 bis 8 Alkoxygruppen, insbesondere aus Ethylenoxid, Propylenoxid oder einer Mischung davon sein, wobei Ethylenoxid bevorzugt wird. Der genannte Alkylrest im Fettalkohol kann gerade oder verzweigt, aliphatisch oder aromatisch, gesättigt oder ungesättigt mit vorzugsweise 1 bis 3 Doppelbindungen sein. Als Beispiele seien genannt: Octyl-, Decyl-, Dodecyl-, Isotridecy-, para-iso-Nonylphenyl-, para-iso-Octylphenyl- und Stearylalkohol, ferner Oleyl-, Cocosalkyl- und Talgalkylalkohol. Die Komponente b) kann auch eine Mischung aus den genannten Fettalkoholen und/oder Fettalkoholethoxylaten sein, so z. B. ein Fettalkoholgemisch mit einem C₁₂-Alkylrest und C₁₄-Alkylrest (C₁₂/C₁₄-Fettalkohol).

Die Komponente b) kann weiterhin vorzugsweise ein Kalium-und/oder Natriumalkylarylsulfonat mit einer oder mehreren, vorzugsweise einer oder zwei Sulfonat-Gruppen, einer oder mehreren, vorzugsweise einer oder zwei Alkylgruppen mit 5 bis 18 C-Atomen, vorzugsweise 12 bis 18 C-Atomen, und einem oder mehreren, vorzugsweise einem oder zwei Benzolringen, sein.

Die Komponente c) umfasst Korrosionsinhibitoren, wie sie für Enteisungsmittel und/oder Vereisungsschutzmittel auf der Basis von Glykolen und Wasser gebräuchlich sind. Geeignete Korrosionsinhibitoren sind Alkalimetallphosphate, Niederalkylphosphate, wie Ethylphosphat, Dimethylphosphat, Isopropylphosphat und dergleichen, Imidazole, wie 1H-Imidazol, Methylimidazol, Benzimidazol und dergleichen, und Triazole, wie Benztriazol und Tolyltriazol. Es können auch Thioharnstoff, Natriumnitrat oder Butin-1,4-diol verwendet werden.

Als Komponente d) dienen dendritische Polymere. "Dendritische Polymere" bezeichnen in der Fachwelt hochverzweigte, globulare Polymere. Diese aus multifunktionellen Monomeren synthetisierten Polymere lassen sich in zwei unterschiedliche Kategorien einteilen, die "Dendrimere" sowie die "hyperverzweigten Polymere". Dendrimere besitzen einen sehr regelmäßigen, radialsymmetrischen Aufbau. Hyperverzweigte Polymere sind im Gegensatz zu den Dendrimeren polydispers und hinsichtlich ihrer Verzweigung und Struktur unregelmäßig. Neben den dendritischen und terminalen Einheiten treten - im Gegensatz zu Dendrimeren - in hyperverzweigten Polymeren auch lineare Einheiten auf.

Bezüglich der unterschiedlichen Möglichkeiten zur Synthese von Dendrimeren und hyperverzweigten Polymeren sei insbesondere auf
a) Fréchet J. M. J., Tomalia D.A. "Dendrimers And Other Dendritic Polymers" John Wiley &Sons, Ltd., West Sussex, UK 2001 sowie
b) Jikei M., Kakimoto M. "Hyperbranched Polymers: A Promising New Class Of Materials" Prog. Polym. Sci., 26 (2001) 1233-1285 und/oder
c) Gao C., Yan D. "Hyperbranched Polymers: From Synthesis To Applications" Prog. Polym. Sci., 29 (2004) 183-275
verwiesen, die hiermit als Referenzen eingeführt werden und als Teil der Offenbarung der vorliegenden Erfindung gelten.

Die in diesen Druckschriften beschriebenen dendritischen Polymere sind auch im Sinne der vorliegenden Erfindung bevorzugt. Weiterhin ist es bevorzugt, dass die dendritischen Polymere zur Klasse der hyperverzweigten Polymere gehören und vorzugsweise mindestens 3 Wiederholungseinheiten pro Molekül, bevorzugt mindestens 10 Wiederholungseinheiten pro Molekül, ferner bevorzugt mindestens 100 Wiederholungseinheiten pro Molekül, zudem bevorzugt mindestens 200 Wiederholungseinheiten und darüber hinaus bevorzugt mindestens 400 Wiederholungseinheiten besitzen, die jeweils mindestens drei, bevorzugt mindestens vier Bindungsmöglichkeiten aufweisen, wobei mindestens 3 dieser Wiederholungseinheiten, besonders bevorzugt mindestens 10 und darüber hinaus bevorzugt mindestens 20 jeweils über mindestens drei, bevorzugt über mindestens vier Bindungsmöglichkeiten mit mindestens drei, bevorzugt mindestens vier weiteren Wiederholungseinheiten verknüpft sind. Verschiedentlich weisen die dendritischen Polymere maximal 10.000, vorzugsweise maximal 5.000 und besonders bevorzugt maximal 2.500 Wiederholungseinheiten auf.

In einer bevorzugten Ausführungsform weist das dendritische Polymer mindestens drei Wiederholungseinheiten auf, welche jeweils mindestens drei mögliche Bindungsmöglichkeiten aufweisen, wobei mindestens drei dieser Wiederholungseinheiten mindestens zwei mögliche Bindungsmöglichkeiten aufweisen.

Dabei wird unter dem Begriff "Wiederholungseinheit" vorzugsweise eine stets wiederkehrende Struktur innerhalb des dendritischen Moleküls verstanden. Unter dem Begriff "Bindungsmöglichkeit" wird vorzugsweise diejenige funktionelle Struktur innerhalb einer Wiederholungseinheit verstanden, mit der eine Verknüpfung zu einer anderen Wiederholungseinheit möglich ist. Die Wiederholungseinheit ist dabei eine Struktur mit jeweils mindestens drei Bindungsmöglichkeiten (X,Y,Z):

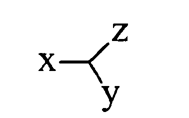

Die Verknüpfung der Monomerbausteine miteinander kann durch Polykondensation, durch Polyaddition, durch radikalische Polymerisation, durch anionische Polymerisation, durch kationische Polymerisation, durch Gruppentransferpolymerisation, durch koordinative Polymerisation oder durch Ringöffnungspolymerisation erfolgen.

Erfindungsgemäß besitzt das dendritische Polymer eine Löslichkeit in einer Glykol-Wasser Mischung (besonders bevorzugt 50 Gewichtsteile Glykol/50 Gewichtsteile Wasser) von mindestens 0,1 g, bevorzugt mindestens 1,0 g und besonders bevorzugt mindestens 2,0 g, jeweils bezogen auf 100,0 g Glykol-Wasser-Mischung. Die Löslichkeit wird vorzugsweise bei 25°C ermittelt.

Die Messung dieser Löslichkeit kann gemäß der sogenannten Kolbenmethode erfolgen, wobei die Löslichkeit der reinen Substanz im Lösungsmittel gemessen wird.

Bei dieser Methode wird die Substanz (Feststoffe müssen pulverisiert werden) bei einer Temperatur im Lösungsmittel aufgelöst, die leicht über der Prüftemperatur liegt. Wenn die Sättigung erreicht ist, wird die Lösung abgekühlt und bei der Prüftemperatur gehalten. Die Lösung wird gerührt, bis das Gleichgewicht erreicht ist. Alternativ kann die Messung unmittelbar bei der Prüftemperatur durchgeführt werden, wenn durch entsprechende Probennahme gesichert ist, dass das Sättigungsgleichgewicht erreicht ist. Dann wird die Konzentration der Prüfsubstanz in der Lösung, die keine ungelösten Substanzteilchen enthalten darf, mit einer geeigneten Analysenmethode bestimmt.

Im Rahmen einer ganz besonders bevorzugten Variante der vorliegenden Erfindung enthält das dendritische Polymer Polyether-, Polyetheramid-, Polyetherimid-, Polyethersulfon-, Polyester-, Polyesteramid-, Polyesterimid-, Polyamid-, Polyamidamin-,

Polyimidamin-, Polyurethan-, Polyharnstoff-, Polyharnstoffurethan-, Polyglycerin-, Polyvinylidenfluorid-, Polysulfonamin-, Polyethylenimin-, Polyacrylsäure-, Polyacrylat-, Polysiloxan-, Polyethersiloxan-, Polyimid-und/oder Polymethacrylateinheiten, wobei sich für die Zwecke der vorliegenden Erfindung Polyester-, Polyesteramid- und/oder Polyethereinheiten ganz besonders bewährt haben.

Der Anteil dieser Einheiten ist zweckmäßigerweise 2 bis 10.000, bevorzugt 2 bis 5.000 und besonders bevorzugt 2 bis 3.000.

Im Rahmen einer ersten besonders bevorzugten Ausführungsform weist das dendritische Polymer NH₂-Endgruppen auf.

Im Rahmen einer zweiten besonders bevorzugten Ausführungsform weist das dendritische Polymer COOH-Endgruppen auf.

Im Rahmen einer dritten besonders bevorzugten Ausführungsform weist das dendritische Polymer OH-Endgruppen auf.

Das dendritische Polymer hat vorzugsweise ein Gewichtsmittel des Molekulargewichts Mw im Bereich von 300 g/mol bis 100.000 g/mol, günstigerweise im Bereich von 300 g/mol bis 50.000 g/mol, besonders bevorzugt im Bereich von 300 g/mol bis 40.000 g/mol, insbesondere im Bereich von 300 g/mol bis 20.000 g/mol.

Die Ermittlung des Molekulargewichts, insbesondere die Bestimmung des Gewichtsmittels des Molekulargewichts Mw und des Zahlenmittels des Molekulargewichts Mn, kann auf an sich bekannte Weise, z. B. mittels Gelpermationschromatographie (GPC), erfolgen, wobei die Messung vorzugsweise in DMF geschieht und als Referenz bevorzugt Polyethylenglykole eingesetzt werden (vgl. u.a. Burgath et. al in Macromol. Chem. Phys., 201 (2000) 782-791). Hierbei wird zweckmäßigerweise eine Kalibierungskurve verwendet, die günstigerweise mit Hilfe von Polystyrol-Standards erhalten wurde. Diese Größen stellen daher apparente Meßwerte dar.

Alternativ kann das Zahlenmittel des Molekulargewichts auch durch Dampf- oder Membranosmose bestimmt werden, die z. B. in K. F. Arndt; G. Müller; Polymercharakterisierung; Hanser Verlag 1996 (Dampdruckosmose) und H.-G. Elias, Makromoleküle Struktur Synthese Eigenschaften, Hütig & Wepf Verlag 1990 (Membranosmose) näher beschrieben werden. Die GPC hat sich erfindungsgemäß jedoch ganz besonders bewährt.

Die Polydispersität Mw/Mn bevorzugter dendritischer Polymere liegt im Bereich von 1-50, günstigerweise im Bereich von 1-40, besonders bevorzugt im Bereich von 1-20, insbesondere im Bereich von 1-10.

Der Verzweigungsgrad des dendritischen Polymers liegt zweckmäßigerweise im Bereich von >0,0% bis 85,0 %, bevorzugt im Bereich von >0,0 % bis 75,0 %, insbesondere im Bereich von >0,0 % bis 65,0 %. Gemäß einer besonders bevorzugten Ausführungsform ist der Verzweigungsgrad des dendritischen Polymers größer 10,0 %, bevorzugt größer 20,0 %, insbesondere größer 25,0 %.

Der Verzweigungsgrad kann gemäß Frey oder Fréchet bestimmt werden. Eine genaue Beschreibung dieser Methoden ist in D. Hölter, A. Burgath, H. Frey, Acta Polymer, 1997, 48, 30 und H. Magnusson,E. Malmström, A. Hult, M. Joansson, Polymer 2002, 43, 301 zu finden.

Unter den erfindungsgemäß einsetzbaren dendritischen Polymeren sind die bereits kommerziell unter der Marke Boltorn^{®} bei der Firma Perstorp AB erhältlichen hyperverzweigten Polyester, Polyether bzw. Polyester/ether, die als Polymin^{®}, Lupasol^{®} und/oder PEI^{®} bei der Firma BASF AG erhältlichen hyperverzweigten Polyethylenimine sowie die unter der Marke Hybrane^{®} bei der Firma DSM BV, Niederlande erhältlichen hyperverzweigten Polyesteramide besonders günstig. Ein anderes Beispiel für ein besonders geeignetes dendritisches Polymer sind hyperverzweigte Polyglycerine der Firma Hyperpolymers mit 800 g/mol < Mw < 40.000 g/mol z.B. mit der Typbezeichnung PG-2, PG-5 und PG-6 und Polyethylenimine mit der Typenbezeichnung PEI-5 und PEI-25 der Firma Hyperpolymers GmbH.

Ein weiteres Beispiel für ein besonders geeignetes hyperverzweigtes Polymer sind Polyimine der Marke Epomin® der Firma Nippon Shokubai Co., Ltd..

Die Komponente e) ist ein weiteres vorzugsweise wasserlösliches Verdickungsmittel. Es werden bevorzugt vernetzte Homo- oder Copolymerisate von ungesättigten Carbonsäuren, wie Acrylsäure, Methacrylsäure und deren Derivate, wie Ester und Amide, ferner Celluloseether (Alkyl-, Hydroxyalkyl- und Carboxyalkylcelluloseether), Polyethylenglykole, Polyvinylpyrrolidone, Polyvinylalkohole, Polyethylenoxide, Xanthangummi und dergleichen oder Mischungen von solchen wasserlöslichen Polymeren eingesetzt. Die besten Ergebnisse werden mit Homo- und Copolymeren der Acrylsäure und/oder der Methacrylsäure erzielt.

Die Komponente f) ist vorzugsweise ein basischer pH-Regler aus der Gruppe der Alkalimetallhydroxide, wie NaOH und KOH, der Alkylamine, wie Butylamin, Hexylamin, Octylamin und Isononylamin, und der Alkanolamine, wie Mono-, Di- und Triethanolamin. Die Alkalimetallhydroxide sind besonders bevorzugt. Enthält das erfindungsgemäße Enteisungsmittel und/oder Vereisungsschutzmittel eine solche basische Verbindung, so liegt deren Gehalt vorzugsweise bei 0,1 Gew.-% bis 5,0 Gew.-%, bezogen auf das Gewicht des Enteisungsmittels und/oder Vereisungsschutzmittels.

Die Komponente g) ist vorzugsweise ein saurer pH-Regler aus der Gruppe der anorganischen oder organischen Säuren, wie Phosphorsäure, Phosphorige Säure, Mono- und Dicarbonsäuren mit Alkylgruppen mit 2 bis 12 C-Atomen, vorzugsweise 4 bis 8 C-Atomen, und einem oder mehreren, vorzugsweise einem oder zwei Benzolringen. Enthält das erfindungsgemäße Enteisungsmittel und/oder Vereisungsschutzmittels einen solchen sauren pH-Regler, so liegt dessen Gehalt vorzugsweise bei 0,1 Gew.-% bis 5,0 Gew.-%, bezogen auf das Gewicht des Enteisungsmittels und/oder Vereisungsschutzmittels.

Das erfindungsgemäße Enteisungsmittel und/oder Vereisungsschutzmittel enthält vorzugsweise mindestens 5,0 Gew.-%, besonders bevorzugt mindestens 10,0 Gew.-% Wasser.

Ferner kann das Enteisungsmittel und/oder Vereisungsschutzmittel Entschäumer, Farbstoffe, Komplexierungsmittel und Antioxidantien enthalten.

Das erfindungsgemäße Enteisungsmittel und/oder Vereisungsschutzmittel besitzt eine vergleichsweise hohe Ruheviskosität. Diese liegt vorzugsweise im Bereich von 3.000 mPas bis 60.000 mPas, bevorzugt im Bereich von 3.500 mPas bis 50.000 mPas und besonders bevorzugt im Bereich von 4.000 mPas bis 40.000 mPas. Sie wird vorzugsweise bei 0,3 Upm und 20°C gemessen.

Weiterhin zeigt das erfindungsgemäße Enteisungsmittel und/oder Vereisungsschutzmittel eine vergleichsweise geringe Fließviskosität. Diese ist vorzugsweise kleiner 1.500 mPas, bevorzugt kleiner 1.200 mPas und besonders bevorzugt kleiner 1000 mPas. Sie wird vorzugsweise bei 60 Upm und 20°C gemessen.

Ferner weist das erfindungsgemäße Enteisungsmittel und/oder Vereisungsschutzmittel nach mechanischer Belastung keinen nennenswerten irreversiblen Viskositätsverlust auf. Vergleicht man die Ruheviskosität des Mittels vor und nach der mechanischen Belastung, so verliert das Mittel üblicherweise nicht mehr als 30 %, bevorzugt nicht mehr als 25 % und ganz besonders bevorzugt nicht mehr als 20 %, seiner ursprünglichen Viskosität.

Zur Untersuchung des Viskositätsverlusts kann z. B. ein Rührgerät vom Typ Ultraturax eingesetzt werden. Beim Eintauchen des Ultraturax-Rührers in das Enteisungsmittel und/oder Vereisungsschutzmittel werden die Verdickermoleküle durch den engen Spalt zwischen Rotor und Stator hindurchgepresst, wobei sie je nach Verdickertyp irreversibel geschädigt werden können. Der dabei auftretende Viskositätsverlust führt zu einer Herabsetzung der Vorhaltezeit.

Im Rahmen der vorliegenden Erfindung soll das vollständig ausgetrocknete Enteisungsmittel und/oder Vereisungsschutzmittel möglichst keine Rückstände bilden, die durch Rehydratisierung zu schwerlöslichen Gelen aufquellen. Zur Untersuchung der Gelbildung können z. B. Aluminiumbleche aus 2024-T3 Material mit einer Fläche von 100 mm x 50 mm x 1 mm verwendet werden. Die Oberfläche der Bleche wird vorzugsweise durch abwechselndes kurzes Eintauchen in je Natronlauge und Salpetersäure gealtert, so dass Fluid- und Gelrückstände besser anhaften können. Das Aluminiumblech wird zweckmäßigerweise vier Sekunden lang vollständig in das zu untersuchende Fluid eingetaucht und anschließend bei einer Temperatur zwischen 30°C und 35°C eingetrocknet. Dieser Schritt wird nach 24 Stunden jeweils sechs mal mit dem gleichen Blech wiederholt. Innerhalb dieser ersten Testphase bildet sich allmählich ein Trockenrückstand auf der Aluminiumoberfläche.

Im zweiten Testabschnitt wird das Blech mit dem eingetrocknetem Fluidrückstand vorzugsweise für 30 Sekunden in entmineralisiertes Wasser eingetaucht und vorsichtig wieder aus dem Wasser gezogen. Nach vorzugsweise 60 Sekunden wird das Gewicht des Bleches mit dem gequollenem Fluidrückstand gewogen. Dieser Rehydratisierungsschritt wird günstigerweise insgesamt zehn mal wiederholt. Anschließend kann man über den Verlauf der Gewichtsänderung die Gelierungsneigung des Fluids beurteilen.

Das Enteisungsmittel und/oder Vereisungsschutzmittel der vorliegenden Erfindung weist auch weiterhin ein überlegenes Eigenschaftsprofil auf. Üblicherweise werden auch alle weiteren Anforderungen der SAE-Spezifikation AMS 1428 erfüllt. So ist die Vereisungsschutzzeit (WSET-Test) dieser Mittel in der Regel größer als 30 Minuten. Die 1:1-Verdünnung mit Wasser zeigt üblicherweise eine Vorhaltezeit von mehr als 5 Minuten. Das Abfließverhalten aller zu testenden Konzentrationen im Windkanal entspricht in der Regel bei allen geforderten Temperaturen der Mindestanforderung. Zusätzlich werden normalerweise auch alle weiteren Materialprüfungstests erfüllt.

Die Herstellung des erfindungsgemäßen Enteisungs- und Vereisungsschutzmittels kann auf an sich bekannte Weise durch Mischen der Komponenten erfolgen.

Die Erfindung wird nun durch Beispiele erläutert.

Es werden zunächst zwei Referenz Enteisungs- und Vereisungsschutzmittel durch Mischen der folgenden Komponenten hergestellt:

### Referenz 1 (Basis 1,2-Propylenglykol):

| | |
|---|---|
| 50,00 Gew.-% | 1,2-Propylenglykol |
| 0,05 Gew.-% | Benzotriazol |
| 0,25 Gew.-% | Carbopol^{®} 934 ^{[1]} |
| 0,1 Gew.-% | Intrasol FA^{®} 12/18/5 ^{[2]} |
| 49.6 Gew.-% | Wasser |

| | |
|---|---|
| [1] Vernetzte Polyacrylsäure, BF Goodrich Chemical Co. [2] Ethoxylierter Fettalkohol, Ashland Deutschland GmbH | |

### Referenz 2 (Basis Ethylenglykol):

| | |
|---|---|
| 50,00 Gew.-% | Ethylenglykol |
| 0,05 Gew.-% | Benzotriazol |
| 0,2 Gew.-% | Carbopol^{®} 934 |
| 0,1 Gew.-% | Intrasol FA^{®} 12/18/5 |
| 49.6 Gew.-% | Wasser |

Die Komponenten wurden durch starkes Rühren bei Raumtemperatur innerhalb von 3 h gelöst. Der pH-Wert dieser und aller im Folgenden beschriebenen Mischungen wurde durch die Zugabe von Natriumhydroxid auf 7.0 eingestellt.

Das erhaltene Enteisungs- und Vereisungsschutzmittel wurde hinsichtlich der Viskosität untersucht (Haake Rheo Stress 600 / Zylindersystem Z40 DIN).

### Referenz 1 (Basis 1,2-Propylenglykol):

| Viskosität (0,3 rpm, 20 °C) | Viskosität (60 rpm, 20 °C) |
|---|---|
| (Ruheviskosität) | (Fließviskosität) |
| 10.050 mPas | 460 mPas |

### Referenz 2 (Basis Ethylenglykol):

| Viskosität (0,3 rpm, 20 °C) | Viskosität (60 rpm, 20 °C) |
|---|---|
| (Ruheviskosität) | (Fließviskosität) |
| 2.570 mPas | 185 mPas |

Es werden nun ein Reihe von erfindungsgemäßen Enteisungs-und Vereisungsschutzmitteln hergestellt.

### Beispiel 1

| | |
|---|---|
| 50,00 Gew.-% | 1,2-Propylenglykol |
| 0,05 Gew.-% | Benzotriazol |
| 0,25 Gew.-% | Carbopol^{®} 934 |
| 0,1 Gew.-% | Intrasol^{®} FA 12/18/5 |
| 0,025 Gew.-% | Boltorn^{®} P500 ^{[1]} |
| 49.6 Gew.-% | Wasser |

| | |
|---|---|
| [1] Dendritischer Polyester/ether, Perstorp Specialty Chemicals AB | |

Die Komponenten wurden durch starkes Rühren bei Raumtemperatur innerhalb von 3 h gelöst. Das erhaltene Enteisungs- und Vereisungsschutzmittel wurde hinsichtlich der Viskosität untersucht.

| Viskosität (0,3 rpm, 20 °C) | Viskosität (60 rpm, 20 °C) |
|---|---|
| (Ruheviskosität) | (Fließviskosität) |
| 15.500 mPas | 680 mPas |

### Beispiel 2

| | |
|---|---|
| 50,00 Gew.-% | 1,2-Propylenglykol |
| 0,05 Gew.-% | Benzotriazol |
| 0,25 Gew.-% | Carbopol^{®} 934 |
| 0,1 Gew.-% | Intrasol^{®} FA 12/18/5 |
| 0,025 Gew.-% | Hybrane^{®} S 1200 ^{[1]} |
| 49.6 Gew.-% | Wasser |

| | |
|---|---|
| [1] Dendritisches Polyesteramid, DSM Hybrane B.V. | |

Die Komponenten wurden durch starkes Rühren bei Raumtemperatur innerhalb von 3 h gelöst. Das erhaltene Enteisungs- und Vereisungsschutzmittel wurde hinsichtlich der Viskosität untersucht.

| Viskosität (0,3 rpm, 20 °C) | Viskosität (60 rpm, 20 °C) |
|---|---|
| (Ruheviskosität) | (Fließviskosität) |
| 12.800 mPas | 480 mPas |

### Beispiel 3

| | |
|---|---|
| 50,00 Gew.-% | 1,2-Propylenglykol |
| 0,05 Gew.-% | Benzotriazol |
| 0,25 Gew.-% | Carbopol^{®} 934 |
| 0,1 Gew.-% | Intrasol^{®} FA 12/18/5 |
| 0,025 Gew.-% | Dendritischer Polyether ^{[1]} |
| 49.6 Gew.-% | Wasser |

| | |
|---|---|
| [1] Dendritischer Polyether erhalten wie in WO 00/56802 beschrieben (Mw: 3800 g/mol, OH-Zahl: 260-300 mg KOH/g, Polydispersität M_{w}/Mₙ: 1,4, Viskosität (23 °C, 30 1/s) : 25 Pas). | |

Die Komponenten wurden durch starkes Rühren bei Raumtemperatur innerhalb von 3 h gelöst. Das erhaltene Enteisungs- und Vereisungsschutzmittel wurde hinsichtlich der Viskosität untersucht.

| Viskosität (0,3 rpm, 20 °C) | Viskosität (60 rpm, 20 °C) |
|---|---|
| (Ruheviskosität) | (Fließviskosität) |
| 20.130 mPas | 750 mPas |

### Beispiel 4

| | |
|---|---|
| 50,00 Gew.-% | Ethylenglykol |
| 0,05 Gew.-% | Benzotriazol |
| 0,2 Gew.-% | ^{®}Carbopol 934 |
| 0,1 Gew.-% | ^{®}INTRASOL FA 12/18/5 |
| 0,025 Gew.-% | ^{®}Hybrane S 1200 |
| 49.6 Gew.-% | Wasser |

Die Komponenten wurden durch starkes Rühren bei Raumtemperatur innerhalb von 3 h gelöst. Das erhaltene Enteisungs- und Vereisungsschutzmittel wurde hinsichtlich der Viskosität untersucht.

| Viskosität (0,3 rpm, 20 °C) | Viskosität (60 rpm, 20 °C) |
|---|---|
| (Ruheviskosität) | (Fließviskosität) |
| 4.600 mPas | 270 mPas |

Mögliche Anwendungsgebiete des erfindungsgemäßen Enteisungs- und Vereisungsschutzmittels sind dem Fachmann unmittelbar offensichtlich. Es eignet insbesondere für die Enteisung von Flugzeugen. Es ist aber für auch für die Enteisung und den Vereisungsschutz anderer Verkehrsmittel, wie Kraftfahrzeuge oder Bahnen, zweckdienlich, oder für beliebige Oberflächen, auf denen ein Vereisungsschutz bestehen soll.

## Patentansprüche

1. Enteisungs- oder Vereisungsschutzmittel, enthaltend, jeweils bezogen auf sein Gesamtgewicht, 35,0 Gew.-% bis 95,0 Gew.-% mindestens eines Glykols, 0,001 Gew.-% bis 5,0 Gew.-% mindestens eines dendritischen Polymers und 0,01 Gew.-% bis 5,0 Gew.-% mindestens eines weiteren Verdickungsmittels sowie ggf. Wasser.

2. Enteisungs- oder Vereisungsschutzmittel nach Anspruch 1, enthaltend mindestens ein Glykol aus der Gruppe der Alkylenglykole mit 2 bis 3 C-Atomen und der Oxalkylenglykole mit 4 bis 6 C-Atomen.

3. Enteisungs- oder Vereisungsschutzmittel nach Anspruch 1 oder 2, enthaltend bis zu 10,0 Gew.-% mindestens eines nichtionischen oder anionischen Tensids.

4. Enteisungs- oder Vereisungsschutzmittel nach einem der vorangehenden Ansprüche, enthaltend 0,01 Gew.-% bis 5,0 Gew.-% mindestens eines Korrosionsinhibitors.

5. Enteisungs- oder Vereisungsschutzmittel nach einem der vorangehenden Ansprüche, enthaltend mindestens ein hyperverzweigtes Polymer.

6. Enteisungs- oder Vereisungsschutzmittel nach einem der vorangehenden Ansprüche, enthaltend ein dendritisches Polymer mit einem Gewichtsmittel des Molekulargewichts Mw im Bereich von 300 g/mol bis 100.000 g/mol.

7. Enteisungs- oder Vereisungsschutzmittel nach einem der vorangehenden Ansprüche, enthaltend ein dendritisches Polymer mit einer Polydispersität Mw/Mn im Bereich von 1-50.

8. Enteisungs- oder Vereisungsschutzmittel nach einem der vorangehenden Ansprüche, enthaltend ein dendritisches Polymer mit einem Verzweigungsgrad DB nach Frey oder Fréchet im Bereich von > 0,0 % bis 85,0 %.

9. Enteisungs- oder Vereisungsschutzmittel nach einem der vorangehenden Ansprüche, enthaltend ein dendritisches Polymer mit einer Löslichkeit in einer Glykol-Wasser Mischung von mindestens 0,1 g, bezogen auf 100,0 g Glykol-Wasser Mischung, gemessen bei 25°C.

10. Enteisungs- oder Vereisungsschutzmittel nach einem der vorangehenden Ansprüche, enthaltend ein dendritisches Polymer mit Polyether-, Polyetheramid-, Polyetherimid-, Polyethersulfon-, Polyester-, Polyesteramid-, Polyesterimid-, Polyamid-, Polyamidamin-, Polyimidamin-, Polyurethan-, Polyharnstoff-, Polyharnstoffurethan-, Polyglycerin-, Polyvinylidenfluorid-, Polysulfonamin-, Polyethylenimin-, Polyacrylsäure-, Polyacrylat-, Polysiloxan-, Polyethersiloxan-, Polyimid- und/oder Polymethacrylateinheiten.

11. Enteisungs- oder Vereisungsschutzmittel nach Anspruch 10, enthaltend ein dendritisches Polymer mit 2 bis 10.000 dieser Einheiten.

12. Enteisungs- oder Vereisungsschutzmittel nach Anspruch 10 oder 11, enthaltend ein dendritisches Polymer mit NH₂-Endgruppen.

13. Enteisungs- oder Vereisungsschutzmittel nach Anspruch 10 oder 11, enthaltend ein dendritisches Polymer mit COOH-Endgruppen.

14. Enteisungs- oder Vereisungsschutzmittel nach Anspruch 10 oder 11, enthaltend ein dendritisches Polymer mit OH-Endgruppen.

15. Enteisungs- oder Vereisungsschutzmittel nach einem der vorangehenden Ansprüche, enthaltend organische Verdickungsmittel aus der Gruppe der Homo- oder Copolymerisate von ungesättigten Carbonsäuren und deren Derivate, der Celluloseether, der Polyethylenglykole, der Polyvinylpyrrolidone, der Polyvinylalkohole, der Polyethylenoxide und der Xanthangummi.

16. Verwendung von 0,001 bis 5,0 Gew.-% mindestens eines dendritischen Polymers und 0,01 Gew.-% bis 5,0 Gew.-% mindestens eines weiteren Verdickungsmittels zur Verdickung eines Enteisungs- oder Vereisungsschutzmittel, welches 35,0 Gew.-% bis 95,0 Gew.-% mindestens eines Glykols sowie ggf. Wasser enthält.

## Claims

1. Deicing or anti-icing agent containing, based in each case on its total weight, from 35.0% by weight to 95.0% by weight of at least one glycol, from 0.001% by weight to 5.0% by weight of at least one dendritic polymer and from 0.01% by weight to 5.0% by weight of at least one further thickener and optionally water.

2. Deicing or anti-icing agent according to Claim 1, containing at least one glycol from the group consisting of the alkylene glycols having 2 or 3 C atoms and the oxalkylene glycols having 4 to 6 C atoms.

3. Deicing or anti-icing agent according to Claim 1 or 2, containing up to 10.0% by weight of at least one nonionic or anionic surfactant.

4. Deicing or anti-icing agent according to any of the preceding claims, containing from 0.01% by weight to 5.0% by weight of at least one corrosion inhibitor.

5. Deicing or anti-icing agent according to any of the preceding claims, containing at least one hyperbranched polymer.

6. Deicing or anti-icing agent according to any of the preceding claims, containing a dendritic polymer having a weight average molecular weight Mw in the range from 300 g/mol to 100 000 g/mol.

7. Deicing or anti-icing agent according to any of the preceding claims, containing a dendritic polymer having a polydispersity Mw/Mn in the range of 1-50.

8. Deicing or anti-icing agent according to any of the preceding claims, containing a dendritic polymer having a degree of branching DB according to Frey or Fréchet in the range from > 0.0% to 85.0%.

9. Deicing or anti-icing agent according to any of the preceding claims, containing a dendritic polymer having a solubility in a glycol-water mixture of at least 0.1 g, based on 100.0 g of glycol-water mixture, measured at 25°C.

10. Deicing or anti-icing agent according to any of the preceding claims, containing a dendritic polymer having polyether, polyetheramide, polyetherimide, polyethersulfone, polyester, polyesteramide, polyesterimide, polyamide, polyamidoamine, polyimidoamine, polyurethane, polyurea, polyureaurethane, polyglycerol, polyvinylidene fluoride, polysulfonamine, polyethyleneimine, polyacrylic acid, polyacrylate, polysiloxane, polyethersiloxane, polyimide and/or polymethacrylate units.

11. Deicing or anti-icing agent according to Claim 10, containing a dendritic polymer having from 2 to 10 000 of these units.

12. Deicing or anti-icing agent according to Claim 10 or 11, containing a dendritic polymer having terminal NH₂ groups.

13. Deicing or anti-icing agent according to Claim 10 or 11, containing a dendritic polymer having terminal COOH groups.

14. Deicing or anti-icing agent according to Claim 10 or 11, containing a dendritic polymer having terminal OH groups.

15. Deicing or anti-icing agent according to any of the preceding claims, containing organic thickeners from the group consisting of the homo- or copolymers of unsaturated carboxylic acids and derivatives thereof, the cellulose ethers, the polyethylene glycols, the polyvinylpyrrolidones, the polyvinyl alcohols, the polyethylene oxides and xanthan gum.

16. Use of from 0.001 to 5.0% by weight of at least one dendritic polymer and from 0.01% by weight to 5.0% by weight of at least one further thickener for thickening a deicing or anti-icing agent which contains from 35.0% by weight to 95.0% by weight of at least one glycol and optionally water.

## Revendications

1. Composition de dégivrage ou antigivrage, contenant, chaque fois par rapport à son poids total, de 35,0 % en poids à 95,0 % en poids d'au moins un glycol, de 0,001 % en poids à 5,0 % en poids d'au moins un polymère dendritique et de 0,01 % en poids à 5,0 % en poids d'au moins un autre épaississant ainsi qu'éventuellement de l'eau.

2. Composition de dégivrage ou antigivrage selon la revendication 1, contenant au moins un glycol choisi dans le groupe des alkylèneglycols ayant 2 ou 3 atomes de carbone et des oxyalkylèneglycols ayant de 4 à 6 atomes de carbone.

3. Composition de dégivrage ou antigivrage selon la revendication 1 ou 2, contenant jusqu'à 10,0 % en poids d'au moins un tensioactif anionique ou non ionique.

4. Composition de dégivrage ou antigivrage selon l'une quelconque des revendications précédentes, contenant de 0,01 % en poids à 5,0 % en poids d'au moins un inhibiteur de corrosion.

5. Composition de dégivrage ou antigivrage selon l'une quelconque des revendications précédentes, contenant au moins un polymère hyper-ramifié.

6. Composition de dégivrage ou antigivrage selon l'une quelconque des revendications précédentes, contenant un polymère dendritique ayant une moyenne en poids de la masse moléculaire Mw dans la plage de 300 g/mole à 100 000 g/mole.

7. Composition de dégivrage ou antigivrage selon l'une quelconque des revendications précédentes, contenant un polymère dendritique ayant une polydispersité Mw/Mn dans la plage de 1-50.

8. Composition de dégivrage ou antigivrage selon l'une quelconque des revendications précédentes, contenant un polymère dendritique ayant un degré de ramification DB selon Frey ou Fréchet dans la plage de > 0,0 % à 85,0 %.

9. Composition de dégivrage ou antigivrage selon l'une quelconque des revendications précédentes, contenant un polymère dendritique ayant une solubilité dans un mélange glycol-eau d'au moins 0,1 g, par rapport à 100,0 g du mélange glycol-eau, mesurée à 25 °C.

10. Composition de dégivrage ou antigivrage selon l'une quelconque des revendications précédentes, contenant un polymère dendritique à motifs polyéther, polyétheramide, polyétherimide, polyéthersulfone, polyester, polyesteramide, polyesterimide, polyamide, polyamide-amine, polyimide-amine, polyuréthanne, polyurée, polyurée-uréthanne, polyglycérol, poly(fluorure de vinylidène), polysulfonamine, polyéthylène-imine, poly(acide acrylique), polyacrylate, polysiloxane, polyéthersiloxane, polyimide et/ou polyméthacrylate.

11. Composition de dégivrage ou antigivrage selon la revendication 10, contenant un polymère dendritique comportant de 2 à 10 000 de ces motifs.

12. Composition de dégivrage ou antigivrage selon la revendication 10 ou 11, contenant un polymère dendritique à groupes NH₂ en bout de chaîne.

13. Composition de dégivrage ou antigivrage selon la revendication 10 ou 11, contenant un polymère dendritique à groupes COOH en bout de chaîne.

14. Composition de dégivrage ou antigivrage selon la revendication 10 ou 11, contenant un polymère dendritique à groupes OH en bout de chaîne.

15. Composition de dégivrage ou antigivrage selon l'une quelconque des revendications précédentes, contenant des épaississants organiques choisis dans le groupe des homopolymères ou copolymères d'acides carboxyliques insaturés et leurs dérivés, des éthers de cellulose, des polyéthylèneglycols, des polyvinylpyrrolidones, des poly(alcool vinylique)s, des polyoxyéthylènes et de la gomme xanthane.

16. Utilisation de 0,001 à 5,0 % en poids d'au moins un polymère dendritique et de 0,01 % en poids à 5,0 % en poids d'au moins un autre épaississant, pour l'épaississement d'une composition de dégivrage ou antigivrage qui contient de 35,0 % en poids à 95,0 % en poids d'un glycol ainsi qu'éventuellement de l'eau.
